# EUROPÄISCHE PATENTSCHRIFT

(11) **EP 2 615 906 B1**
(45) Veröffentlichungstag und Bekanntmachung des Hinweises auf die Patenterteilung: **14.02.2018**
(21) Anmeldenummer: 10779232.7
(22) Anmeldetag: 29.10.2010
(51) Int. Cl.: A01G 9/16, A01G 31/02

(54) **VORRICHTUNG UND VERFAHREN ZUR AUFZUCHT EINER ODER MEHRERER PFLANZEN**
DEVICE AND METHOD FOR CULTIVATING ONE OR MORE PLANTS
DISPOSITIF ET PROCÉDÉ POUR LA CULTURE D'UNE OU DE PLUSIEURS PLANTES

(30) Priorität: 17.09.2010 DE 202010012739 U
(43) Veröffentlichungstag der Anmeldung: 24.07.2013
(73) Patentinhaber: Horticoop B.V., 2665 ZJ Bleiswijk (NL); Daas, Kamal, 2662 AP Bergschenhoek (NL); Daas, Talal, 60565 Naperville, Illinois (US)
(72) Erfinder: DAAS, Kamal, 2662 AP Bergschenhoek (NL); DAAS, Talal, Naperville, IL 60565 (US); VAN DER DRIFT, Peter, 2665 ZJ Bleiswijk (NL)
(74) Vertreter: Herrmann, Uwe
(86) Internationale Anmeldenummer: PCT/EP2010/006626
(87) Internationale Veröffentlichungsnummer: WO 2012/034575

(56) Entgegenhaltungen:
- WO-A1-01/62074
- CN-Y- 2 323 582
- FR-A- 1 266 328
- US-A- 5 394 647
- US-A- 6 088 958
- US-A1- 2006 156 624

## Beschreibung

Die Erfindung betrifft eine Vorrichtung zur Aufzucht einer oder mehrerer Pflanzen sowie ein Verfahren zur Aufzucht einer oder mehrerer Pflanzen.

Vorrichtungen und Verfahren zur kommerziellen Aufzucht von Pflanzen sind im Stand der Technik bekannt. US 5 394 647 A betrifft ein hydroponisches Pflanzenproduktionssystem.

Ein Ziel der Erfindung ist es, eine Vorrichtung bereitzustellen, welche eine verbesserte Aufzucht von Pflanzen und insbesondere ernteguttragenden Nutzpflanzen ermöglicht.

Dieses Ziel wird erfindungsgemäß mit einer Vorrichtung gemäß Ansprüchen 1 - 10 und einem Verfahren gemäß Ansprüchen 11 - 14 erreicht. Vorteilhafte Ausführungsformen ergeben sich aus den Unteransprüchen.

Demnach betrifft die Erfindung eine Vorrichtung zur Aufzucht einer oder mehrerer Pflanzen, wobei die Vorrichtung wenigstens eine erste und eine zweite Kammer aufweist, die durch eine erste Trennwand voneinander abgetrennt sind. Die Innenräume der ersten und der zweiten Kammer sind dabei durch eine oder mehrere Verbindungsöffnungen in der ersten Trennwand verbunden. Die zweite Kammer weist ferner eine oder mehrere Ausgangsöffnungen auf, die an einer zweiten Trennwand angeordnet sind. Das Volumen der ersten Kammer und/oder der zweiten Kammer ist veränderbar.

In einer bevorzugten Ausführungsform liegt die zweite Trennwand der ersten Trennwand gegenüber. Vorzugsweise weist die Vorrichtung mehrere Verbindungsöffnungen und mehrere Ausgangsöffnungen auf. Die Begriffe "Trennwand" und "Trennplatte" werden im Verlauf der Anmeldung synonym zueinander verwendet. Damit soll zum Ausdruck gebracht werden, dass es sich vorzugsweise um ein plattenförmiges Bauteil handelt. Dabei dienen die Verbindungsöffnungen vorzugsweise zur Aufnahme eines Bereiches zwischen Wurzel und Erntegut und die Ausgangsöffnungen zur Aufnahme eines Bereiches zwischen Erntegut und Blätterkrone.

Die erfindungsgemäße Vorrichtung eignet sich insbesondere zur Aufzucht von Nutzpflanzen deren Erntegut unterhalb des Blätterdaches liegt, wie beispielsweise Kartoffel, Süßkartoffel, Zwiebel oder Trüffel.

Während der Aufzucht dient die erste Kammer im Wesentlichen zur Aufnahme der Wurzeln der Pflanzen und die zweite Kammer im Wesentlichen zur Aufnahme von Teilen der Pflanze, die das Erntegut umfassen. Jenseits, d.h. oberhalb der zweiten Kammer soll sich das Blätterdach der Pflanze befinden. Die Sprossachse der Pflanze verläuft von den Wurzeln in der ersten Kammer durch eine erste Verbindungsöffnung in die zweite Kammer, durchläuft diese zweite Kammer und tritt durch eine Ausgangsöffnung an die Oberfläche jenseits der zweiten Kammer.

In einer Ausführungsform sind die erste und die zweite Trennwand im Wesentlichen parallel zueinander und vorzugsweise horizontal angeordnet. Dabei bildet die erste Trennwand die untere Begrenzung der zweiten Kammer und die zweite Trennwand die obere Begrenzung der zweiten Kammer. Die erste Kammer ist unterhalb der zweiten Kammer angeordnet, wobei die erste Trennwand die obere Begrenzung der ersten Kammer bildet. Die zweite Kammer ist im Wesentlichen vollumfänglich, das heißt entlang dem vollen Umfang der ersten und zweiten Trennwand von seitlichen Begrenzungswänden umgeben, die die erste und die zweite Trennwand miteinander verbinden. Der Abstand zwischen der ersten Trennwand und der zweiten Trennwand wird in weiterer Folge als Höhe der zweiten Kammer bezeichnet.

In einer Ausführungsform haben die erste und/oder die zweite Trennwand vier Seitenkanten, nämlich zwei gegenüberliegende Paare an vorzugsweise parallelen Seitenkanten. Die Seitenkanten müssen nicht gerade sein, sondern können auch gekrümmt sein oder im Extremfall sogar stetig ineinander übergehen. Vorzugsweise ist die erste und/oder die zweite Trennwand rechteckig. Die von einem gegenüberliegenden Paar an Seitenkanten gebildeten Seiten der erfindungsgemäßen Vorrichtung werden in weiterer Folge als Front- und Rückseite der Vorrichtung bezeichnet. Die Richtung dieser Seitenkanten stellt die Breitenrichtung der Vorrichtung dar. Die von dem anderen gegenüberliegenden Paar an Seitenkanten gebildeten Seiten der Vorrichtung werden in weiterer Folge als linke und rechte Seite der Vorrichtung bezeichnet. Die Richtung dieser Seitenkanten stellt die Längsrichtung der Vorrichtung dar.

In einer Ausführungsform haben die erste Trennwand und die zweite Trennwand im Wesentlichen dieselben Abmessungen.

In einer Ausführungsform wird durch die Front- und Rückseitigen Begrenzungen der Kammern, durch die linken und rechten Seitenwände der ersten Kammer, gegebenenfalls durch die Bodenplatte der ersten Kammer und gegebenenfalls durch die erste und/oder die zweite Trennwand ein stabiler Rahmen gebildet.

In einer Ausführungsform ist zumindest die zweite Kammer und gegebenenfalls auch die erste Kammer flach oder kanalförmig ausgebildet. Flach bedeutet vorzugsweise am Beispiel der zweiten Kammer erklärt, dass die Höhe der Kammer maximal halb so lang ist wie die Längen sowohl der linken bzw. rechten Seitenkante als auch der vorderen bzw. hinteren Seitenkante der Trennwände. Kanalförmig bedeutet vorzugsweise am Beispiel der zweiten Kammer erklärt, dass die Höhe der Kammer maximal halb so lang ist wie die Längen der vorderen bzw. hinteren Seitenkante der Trennwände. Die Längen der linken bzw. rechten Seitenkante der Trennwände kann jedoch ähnlich der Höhe sein.

In einer Ausführungsform ist die erste Kammer abgesehen von den Verbindungsöffnungen in der ersten Trennwand im Wesentlichen wasserdicht ausgeführt.

In einer Ausführungsform schwimmt die erste Trennwand auf einem Nährmedium oder Wasser, oder liegt auf einem Substrat auf, welches sich in der ersten Kammer der Position einer oder mehrerer und/oder seitlicher Wandungen befindet. Die Veränderung des Volumens der ersten Kammer und/oder der zweiten Kammer kann vorzugsweise durch eine Veränderung des Abstandes zwischen erster und zweiter Trennplatte und/oder durch eine Änderung der Position der ersten und/oder zweiten Trennplatte und/oder der Änderung der Position einer oder mehrerer seitlicher Wandungen erfolgen, wobei die Trennplatten die obere und die untere Begrenzung der Kammer bilden. Vorzugsweise wird dabei die zweite Trennplatte bewegt, während die erste Trennplatte stationär bleibt. Es ist jedoch im Rahmen der Erfindung auch denkbar, dass die erste Trennplatte bewegt wird, während die zweite Trennplatte stationär bleibt, oder dass beide Trennplatten bewegt werden. Das Volumen bzw. der Abstandes der Trennplatten kann in definierten Schritten oder stufenlos verstellbar sein.

In einer Ausführungsform kann die Veränderung des Volumens der zweiten Kammer auch durch die Pflanze selbst erfolgen. Beim Wachstum der Pflanze bzw. des Erntegutes kann die zweite Trennplatte nach oben gehoben und/oder die erste Trennwand nach unten gedrückt werden.

Durch eine schrittweise oder kontinuierliche Veränderung des Volumens der zweiten Kammer, in der sich das Erntegut befindet, kann bei wachsenden Pflanzen mehr Platz für das Erntegut geschaffen werden und somit der Ertrag bei der Ernte optimiert werden.

In einer Ausführungsform kann der Abstand der ersten und der zweiten Trennwand in einer Einstellung so gering sein, dass diese aneinander Anliegen oder dass die zweite Trennwand nur knapp oberhalb der ersten Trennwand liegt. Dies ermöglicht bei Beginn der Aufzucht, dass ein Keimling der durch die Verbindungsöffnung in die zweite Kammer emporragt, sogleich durch die Ausgangsöffnung hinauswachsen kann.

Die erste Trennwand kann von einem Substrat oder einer in der ersten Kammer befindlichen Lösung getragen werden bzw. darauf aufliegen oder davon beabstandet sein.

In einer Ausführungsform ist ein Anhebe- und/oder Arretierungsmittel vorgesehen, mit der der Abstand zwischen der ersten und der zweiten Trennplatte variiert und eingestellt werden kann. Dieses Mittel befindet sich vorzugsweise im Bereich der Frontseite und/oder Rückseite der erfindungsgemäßen Vorrichtung, und weiter vorzugsweise an der frontseitigen oder rückseitigen Seitenwand der zweiten Kammer. Dabei kann es sich über elektronische oder hydraulische Hebemechanismen handeln, oder um einfache Haken zur Befestigung der Trennplatten in verschiedenen Positionen. Gegebenenfalls umfasst die erfindungsgemäße Vorrichtung eine Steuereinrichtung und/oder einen Motor, die das Volumen der zweiten Kammer regulieren.

In einer Ausführungsform ist wenigstens eine Seitenwand der zweiten Kammer, vorzugsweise die linke und rechte Seitenwand der zweiten Kammer, und gegebenenfalls alle vier Seitenwände der zweiten Kammer flexibel oder elastisch ausgebildet, zumindest an den Verbindungslinien mit der ersten und/oder zweiten Trennwand. In einer Ausführungsform ist wenigstens eine Seitenwand der zweiten Kammer, vorzugsweise die linke und rechte Seitenwand der zweiten Kammer, und gegebenenfalls alle vier Seitenwände der zweiten Kammer aus steifen Teilen gefertigt, die jedoch faltbar oder ausziehbar sind.

In einer Ausführungsform ist wenigstens eine Seitenwand der zweiten Kammer, vorzugsweise die fordere und hintere Seitenwand der zweiten Kammer, und gegebenenfalls alle vier Seitenwände der zweiten Kammer starr ausgebildet, wobei die erste und/oder zweite Trennwand entlang der jeweiligen Seitenwand verschiebbar angeordnet ist.

Dadurch bleibt die zweite Kammer trotz Verstellen des Volumens stets geschlossen.

In einer Ausführungsform weist die Vorrichtung die gleiche Anzahl an Verbindungsöffnungen und Ausgangsöffnungen auf. So kann jeder Pflanze eine Verbindungsöffnung und eine Ausgangsöffnung zugeteilt werden.

In einer Ausführungsform ist jeweils ein Paar an Verbindungsöffnungen und Ausgangsöffnungen miteinander fluchtend angeordnet. Dies ermöglicht ein gerades Wachstum der Pflanze, wobei die Sprossachse in vertikaler Richtung angezüchtet wird.

In einer Ausführungsform sind an den Verbindungsöffnungen oder im Bereich der Verbindungsöffnungen Mittel zur Fixierung eines Pflanzenteil, vorzugsweise eines Samens, eines Setzlings, einer Wurzelknolle oder dergleichen vorhanden. Diese können gegebenenfalls in die erste und/oder in die zweite Kammer hineinragen. Vorzugsweise sind diese Mittel an der Unterseite der Verbindungsöffnung angeordnet bzw. befestigt und ragen in die erste Kammer. Diese haben den Zweck, dass das betreffende Pflanzenteil unterhalb der Verbindungsöffnung in Position gehalten werden kann und dass sicherstellt wird, dass die Sprossachse durch die Verbindungsöffnung wächst. Geeignete Mittel umfassen einen Haken, eine Kralle, ein Netz, ein Gitter eine Ablagefläche und ähnliches. Oft umfassen diese Mittel auch ein Rohr und/oder einen Trichter, der sich von unten zur Verbindungsöffnung hin verjüngt.

In einer Ausführungsform sind an den Ausgangsöffnungen Mittel zur Führung eines Pflanzenteiles vorhanden, die gegebenenfalls in die zweite Kammer hineinragen und/oder von der Oberfläche der zweiten Kammer abstehen. Vorzugsweise sind diese Mittel an der Unterseite der Ausgangsöffnung angeordnet bzw. befestigt und ragen in die zweite Kammer. Diese haben den Zweck, dass sicherstellt wird, dass die Sprossachse durch die Ausgangsöffnung wächst. Geeignete Mittel umfassen einen Trichter, der sich von unten zur Ausgangsöffnung hin verjüngt.

Dies begünstigt gemeinsam mit einem anfänglich geringem Abstand der ersten und der zweiten Trennwand bei Beginn der Aufzucht, dass ein Keimling der durch die Verbindungsöffnung in die zweite Kammer emporragt, sogleich durch die Ausgangsöffnung hinauswachsen kann.

In einer weiteren Ausführungsform weist die Vorrichtung eine dritte Kammer auf. Dabei teilen sich die zweite und die dritte Kammer die zweite Trennwand. Die Innenräume der zweiten und der dritten Kammer sind durch die Ausgangsöffnungen miteinander verbunden.

In einer Ausführungsform ist die dritte Kammer direkt oberhalb der zweiten Kammer angeordnet, wobei die zweite Kammer die erste und die dritte Kammer voneinander beabstandet. Die erfindungsgemäße Vorrichtung nimmt eine sandwichartige Gestalt an, wobei die erste Kammer unten, die zweite Kammer in der Mitte und die dritte Kammer oben liegt.

In einer Ausführungsform ist die dritte Kammer voluminös, beispielsweise in Form einer Glocke ausgebildet, um genügend Platz für das Blätterdach der Pflanze zu bieten.

In einer Ausführungsform sind die Außenwände der dritten Kammer zumindest teilweise aus einem lichtdurchlässigen Material gefertigt. Die Außenwände umfassen alle Begrenzungsflächen der dritten Kammer bis auf die zweite Trennwand, welche vorzugsweise den Boden der dritten Kammer ausbildet.

In einer Ausführungsform weist die dritte Kammer wenigstens ein Beleuchtungsmittel auf, welches den Innenraum der dritten Kammer beleuchtet bzw. welches den Innenraum der dritten Kammer bestrahlt.

So wird sichergestellt, dass das Blätterdach der Pflanze genügend Licht erhält. In der Ausführungsform, in der die erfindungsgemäße Vorrichtung drei Kammern umfasst stellt die erfindungsgemäße Vorrichtung eine Art Minigewächshaus dar, wobei die Gesamtheit der Pflanze im wesentlichen innerhalb von den drei Kompartimenten angeordnet ist und somit klimatisch von der Umgebung abgeschottet wird.

In einer Ausführungsform kann vorgesehen sein, dass die erste und/oder die zweite und/oder die dritte Kammer in mehrere Kompartimente unterteilt ist. Dies kann vorteilhaft sein um eine Ausbreitung von Bakterien oder Pilzen von einer zur nächsten Pflanze zu erschweren. In einer Ausführungsform ist dabei vorgesehen, dass die erste Kammer in Kompartimente unterteilt ist. In einer weiteren Ausführungsform ist dabei vorgesehen, dass die zweite Kammer in Kompartimente unterteilt ist.

In einer Ausführungsform sind alle Begrenzungsflächen der ersten Kammer im Wesentlichen starr. Dies hat den Vorteil einer hohen Stabilität der erfindungsgemäßen Vorrichtung. Ferner wird die Unterbringung eines feuchten Substrates für die Wurzeln der Pflanzen begünstigt. Auch Wasser im Falle einer Hydrokultur kann ein einer starren ersten Kammer besser gehalten werden.

In einer Ausführungsform ist zumindest eine Außenfläche der ersten Kammer zumindest abschnittsweise verschwenkbar und/oder verschiebbar und/oder abnehmbar. Bevorzugt handelt es sich dabei um eine der ersten Trennwand gegenüberliegende Wand. Dies ist bevorzugt die Bodenfläche der ersten Kammer.

Dadurch können die Wurzeln einer verbrauchten Pflanze, Substrat und Wasser aus der ersten Kammer einfach durch Unterstellen einer Wanne und öffnen der Begrenzung aufgesammelt werden.

In einer anderen Ausführungsform ist wird zumindest ein Teil der Außenfläche der ersten Kammer durch einen vorzugsweise wasserdichten Sack oder eine Kunststoffkappe gebildet. Die Außenfläche umfasst alle Begrenzungsflächen der ersten Kammer bis auf die erste Trennwand, welche vorzugsweise die Decke der dritten Kammer ausbildet. Der Sack oder die Kappe bestehen vorzugsweise Kunststoff.

In einer Ausführungsform sind der Sack oder die Kappe abnehmbar bzw. austauschbar. Das Abnehmen kann durch das Lösen eines geeigneten Verschlusses wie einem Reisverschluss, einem Rastverschluss, einem Klettverschluß oder ähnlichem Erfolgen.

In einer Ausführungsform ist der Sack oder die Kappe ein durchhängendes bzw. durchgebogenes Bauteil mit einer rechteckigen Grundfläche, das an einer Seitenkante über die gesamte Länge der linken Seite der Vorrichtung befestigt ist und an der gegenüberliegenden Seitenkante über die gesamte Länge der rechten Seite der Vorrichtung befestigt ist.

In einer Ausführungsform ist der Sack oder die Kappe entlang der Längsrichtung des Bauteils an einem schienenartigen Führungselement an den Seiten der Vorrichtung verschiebbar bzw. abschiebbar. Geeignete schienenartige Führungselemente können an den linken und rechten Seitenwänden der ersten Kammer oder an den linken und rechten Seitenkanten der ersten Trennplatte sitzen.

In einer Ausführungsform weist die erste und/oder die zweite und/oder die dritte Kammer Steuermittel zur Einstellung des Raumklimas auf. Alle drei Kammern können individuell je nach Bedarf ein oder mehrere Befeuchtungsanlagen wie Sprenkler oder Nebelbildner, und/oder Beleuchtungsmittel wie Lampen, und/oder Heizvorrichtungen wie Heizstrahler, Heizschlangen oder Warmwasserleitungen, und/oder Kühlvorrichtungen aufweisen. Alle drei Kammern können individuell je nach Bedarf ein oder mehrere Mittel zur Zirkulation von Wasser und/oder Luft in einer Kammer oder den Durchzug von Wasser und/oder Luft durch eine Kammer aufweisen. Solche Mittel umfassen beispielsweise Wasserpumpen, und/oder Luftpumpen und/oder Ventilatoren. Vorzugsweise ist vorgesehen, dass in der zweiten Kammer Mittel zur Einstellung der Luftfeuchtigkeit und der Temperatur vorgesehen sind.

In einer Ausführungsform weist die erste und/oder die zweite und/oder die dritte Kammer ein oder mehrere Mittel zur Ermittlung des Raumklimas auf. Geeignete Mittel umfassen Temperaturfühler oder einem Luftfeuchtigkeitsfühler.

Diese Mittel werden in einer Ausführungsform von einer zentralen Steuereinheit gesteuert. Diese Steuereinheit bezieht vorzugsweise Messgrößen von Meßfühlern in der Kammer und stellt die Steuerungsmittel entsprechend ein, um eine Zielgröße zu erreichen.

So herrscht in jeder der Kammern ein bestimmtes Mikroklima. Durch eine entsprechende Optimierung der Klimata kann das Wachstum der Pflanzen und den Ernteertrag je nach Pflanzenart optimiert werden.

In einer Ausführungsform befindet sich in der ersten und/oder der zweiten und/oder dritten Kammer eine Vorrichtung zum Besprühen der jeweiligen Kammer mit Wasser oder einer Nährstofflösung. Insbesondere kann vorgesehen sein, daß in der ersten Kammer ein Zerstäuber vorhanden ist, welcher mit einer Nährstofflösung versorgt wird. So kann die erste Kammer mit einem nährstoffhaltigen Nebel ein gefüllt werden. Die erfindungsgemäße Vorrichtung eignet sich in dieser Ausführungsform für einen aeroponischen Anbau von Pflanzen.

In einer Ausführungsform weist die erste und/oder die zweite und/oder die dritte Kammer einer erfindungsgemäßen Vorrichtung einen Zulauf und/oder eine Ablauf auf. Durch den Zulauf bzw. die Zulaufleitung kann Wasser, eine Nährstofflösung, nährstoffreiche feuchte Luft, Nährstoffnebel oder auch Frischluft in die erste Kammern eingebracht werden. Durch den Zulauf bzw. die Zulaufleitung kann verbrauchtes Wasser oder verbrauchte Luft abgeführt werden. Vorzugsweise weist die erste Kammer einen Zulauf und einen Ablauf auf. Zudem ist es möglich, daß auch die zweite und/oder die dritte Kammer einen Zulauf und/oder Ablauf besitzt, um das Raumklima nicht individuell an der Vorrichtung einstellen zu müssen sondern Luft mit entsprechender Temperatur und Luftfeuchtigkeit gesammelt an mehrere erfindungsgemäße Vorrichtungen leiten zu können. Ferner können diese Zu- und Ableitungen der Durchlüftung der jeweiligen Kammern dienen.

In einer Ausführungsform ist wenigstens eine Seitenwand der zweiten Kammer, vorzugsweise die linke und rechte Seitenwand der zweiten Kammer, und gegebenenfalls alle vier Seitenwände der zweiten Kammer zumindest abschnittsweise verschwenkbar und/oder verschiebbar und/oder abnehmbar.

In einer Ausführungsform ist die linke und/oder rechte Seitenwand der zweiten Kammer ein gegebenenfalls elastisches Bauteil mit einer rechteckigen Grundfläche, das an einer Seitenkante über die gesamte Seitenlänge der Vorrichtung im Bereich der ersten Trennplatte befestigt ist und an der gegenüberliegenden Seitenkante über die gesamte Seitenlänge der Vorrichtung im Bereich der zweiten Trennplatte befestigt ist. In einer Ausführungsform ist die linke und/oder rechte Seitenwand entlang der Längsrichtung des Bauteils an einem schienenartigen Führungselement verschiebbar bzw. abschiebbar.

Durch das Verschwenken, Verschieben oder Abnehmen einer der Seitenwand beziehungsweise mehrerer Seitenwände wird die Entnahme des Erntegutes aus der zweiten Kammer erleichtert.

In einer Ausführungsform sind die linke und die rechte Seitenwand der zweiten Kammer zumindest abschnittsweise verschwenkbar und/oder verschiebbar und/oder abnehmbar. In diesem Fall kann Erntegut geerntet werden, indem ein Schild oder ein ähnliches Werkzeug von einer Seite durch die zweite Kammer getrieben wird, so dass das Erntegut auf der anderen Seite aus der zweiten Kammer hinausgedrückt wird. Auf der Entnahmeseite des Erntegutes kann ein Förderband oder eine Sammelwanne vorhanden sein, die das Erntegut auffängt bzw. abtransportiert. Dieser Vorgang lässt sich gut automatisieren.

In einer weiteren Ausführungsform ist die erfindungsgemäße Vorrichtung als modulare Aufzuchteinheit ausgebildet. Eine solche Einheit kann tischförmig ausgeführt sein, wobei die Tischplatte durch die erfindungsgemäße Vorrichtung gebildet wird.

Die erfindungsgemäße Vorrichtung kann ferner Stellbeine, Ankuppelungselemente für verschiedene Trägerelement und Ähnliches aufweisen. So können die vorzugsweise modularen Einheiten angehoben, verschoben, vorrollt und in Position gebracht werden.

Die Erfindung betrifft ferner eine Vorrichtung zur Aufzucht einer oder mehrerer Pflanzen, wobei die Vorrichtung als modulare Einheit ausgebildet ist. Vorzugsweise ist die Vorrichtung gemäß einer der zuvor beschriebenen Ausführungsformen ausgebildet. Durch die modulare Anordnung kann unter anderem erreicht werden, dass eine Ausbreitung von Bakterien oder Pilzen von einer zur nächsten Vorrichtung erschwert wird. Eine modulare Einheit im Rahmen der vorliegenden Erfindung ist vorzugsweise so ausgestaltet, dass sie von einem Benutzer manuell oder maschinell bewegt werden kann, so dass sie im Falle eines Bakterienbefalls oder dergleichen austauschbar oder entfernbar ist.

In einer Ausführungsform wird jede modulare Einheit separat oder parallel mit Wasser und/oder Nährstofflösung versorgt.

In weiterer Ausgestaltung der Erfindung ist vorgesehen, dass die zweite Kammer sich oberhalb und/oder an einer oder beiden Seiten erstreckt. So ist es beispielsweise denkbar, dass sich die zweite Kammer sowohl oberhalb als auch in einem Bereich ein- oder beidseitig neben der ersten Kammer befindet.

Ein weiteres Ziel der Erfindung ist es, ein Verfahren bereitzustellen, welches eine verbesserte Aufzucht von Pflanzen und insbesondere ernteguttragenden Nutzpflanzen ermöglicht.

Dieses Ziel wird erfindungsgemäß mit einem Verfahren gemäß Anspruch 12 erreicht. Vorteilhafte Ausführungsformen ergeben sich aus den Unteransprüchen.

Demnach betrifft die Erfindung ein Verfahren zur Aufzucht einer oder mehrerer Pflanzen in einer erfindungsgemäßen Vorrichtung, wobei das Volumen der zweiten Kammer vergrößert wird.

Die Vergrößerung kann schrittweise oder stufenlos erfolgen, vorzugsweise durch schrittweise oder stufenlose Veränderung des Abstandes der ersten und zweiten Trennwand. Die blättertragende Spitze der Sprossachse soll dabei stets jenseits der zweiten Begrenzungsfläche und gegebenenfalls in der dritten Kammer gehalten werden. Das Erntegut soll in der im Verlaufe des Verfahrens vergrößerten, zweiten Kammer entstehen. Alternativ ist auch denkbar, dass das Volumen durch Vergrößerung des Abstandes der seitlichen Begrenzungsflächen erfolgt.

In einer Ausführungsform umfasst das Verfahren den Schritt des Bereitstellens eines keimbaren Pflanzenteils in der ersten Kammer der Vorrichtung unmittelbar unterhalb einer Verbindungsöffnung, gegebenenfalls an einem oben näher beschriebenen Haltemittel. Beim keimen wachsen die Wurzeln der Jungpflanze in die erste Kammer und die Sprossachse durchdringt eine Verbindungsöffnung und eine korrespondierende Ausgangsöffnung.

In einer Ausführungsform wird über zumindest einen Teil und vorzugsweise über den gesamten Verlauf des Verfahrens das Raumklima in der ersten und/oder der zweiten und/oder der dritten Kammer gegebenenfalls individuell beobachtet und/oder gesteuert.

Dieser Vorgang lässt sich besonders gut automatisieren.

Ein weiteres Ziel der Erfindung ist es, ein Verfahren bereitzustellen, welches eine verbesserte Ernte des Erntegutes von Nutzpflanzen ermöglicht.

Dieses Ziel wird erfindungsgemäß mit einem Verfahren gemäß Anspruch 12 erreicht. Vorteilhafte Ausführungsformen ergeben sich aus den Unteransprüchen.

Demnach betrifft die Erfindung ein Verfahren zur Ernte des Erntegutes einer oder mehrerer Pflanzen in einer erfindungsgemäßen Vorrichtung umfassend das Verschwenken, Verschieben oder Abnehmen zumindest einer Seitenwand der zweiten Kammer und die anschließende Entnahme des Erntegutes. Vorzugsweise werden zwei gegenüberliegende Seitenwände und besonders bevorzugt die linke und die rechte Seitenwand der zweiten Kammer zumindest abschnittsweise verschwenkt und/oder verschoben und/oder abgenommen. Besonders bevorzugt ist das Verschieben der Seitenwände entlang der Längsachse der Vorrichtung.

In einer Ausführungsform wird ein Schild oder ein ähnliches Werkzeug von einer Seite durch die zweite Kammer getrieben und das Erntegut auf der anderen Seite hinausgedrückt. Gegebenenfalls wird das hinausgedrückte Erntegut auf der Entnahmeseite mit einer Sammelwanne aufgefangen. Alternativ kann das hinausgedrückte Erntegut auf der Entnahmeseite mit einem Förderband abtransportiert werden.

Dieser Vorgang lässt sich besonders gut automatisieren.

In einer Ausführungsform wird bei oder nach der Ernte ferner eine bodenseitige Begrenzungsfläche der ersten Kammer geöffnet. So können lose gewordenen Wurzeln aus der ersten Kammer fallen. Alternativ kann ein Sack oder eine Kappe, die einen Teil der Außenbegrenzung der ersten Kammer bilden von der ersten Kammer abgenommen bzw. abgeschoben werden. Besonders bevorzugt ist das Verschieben des Sacks oder der Kappe entlang der Längsachse der Vorrichtung.

In einer Ausführungsform wird bei der Ernte ferner ein Schild oder eine Schaufel oberhalb der zweiten Begrenzungsfläche vorbeigeführt. So kann das lose gewordene Blätterdach von der Vorrichtung gekehrt werden. Gegebenenfalls werden hinausgedrückte oder ausfallende Pflanzenteile oder Substratteile mit einer Sammelwanne aufgefangen oder mit einem Förderband abtransportiert.

Weitere Einzelheiten und Vorteile der Erfindung ergeben sich aus den nachfolgenden Ausführungsbeispielen.

In den Figuren zeigen:
- Figuren 1a bis 1e:: verschiedene Ansichten einer ersten Ausführungsform einer erfindungsgemäßen Vorrichtung,
- Figur 2:: einen perspektivischen Schnitt durch eine weitere Ausführungsform einer erfindungsgemäßen Vorrichtung,
- Figuren 3a bis 3d:: verschiedene Ansichten einer weiteren Ausführungsform einer erfindungsgemäßen Vorrichtung,
- Figuren 4a bis 4d:: verschiedene Ansichten einer weiteren Ausführungsform einer erfindungsgemäßen Vorrichtung,
- Figuren 5a bis 5d:: verschiedene Ansichten einer weiteren Ausführungsform einer erfindungsgemäßen Vorrichtung,
- Figur 6:: einen perspektivischen Schnitt durch die in Figuren 5a bis 5d gezeigte weitere Ausführungsform einer erfindungsgemäßen Vorrichtung,
- Figuren 7a und 7b:: eine mögliche Anordnung mehrere erfindungsgemäßer Vorrichtungen,
- Figur 8:: eine weitere mögliche Anordnung mehrere erfindungsgemäßer Vorrichtungen,
- Figur 9:: unterschiedliche Ansichten einer weiteren Ausführungsform der erfindungsgemäßen Vorrichtung,
- Figur 10:: unterschiedliche Ansichten einer weiteren Ausführungsform der erfindungsgemäßen Vorrichtung mit einer zweiten Kammer, die sich oberhalb und zu beiden Seiten der ersten Kammer erstreckt und
- Figur 11:: verschiedene Ansichten einer weiteren Ausführungsform der erfindungsgemäßen Vorrichtung, bei der die erste Kammer kleiner ausgeführt ist als in der Ausführungsform gemäß Figur 10.

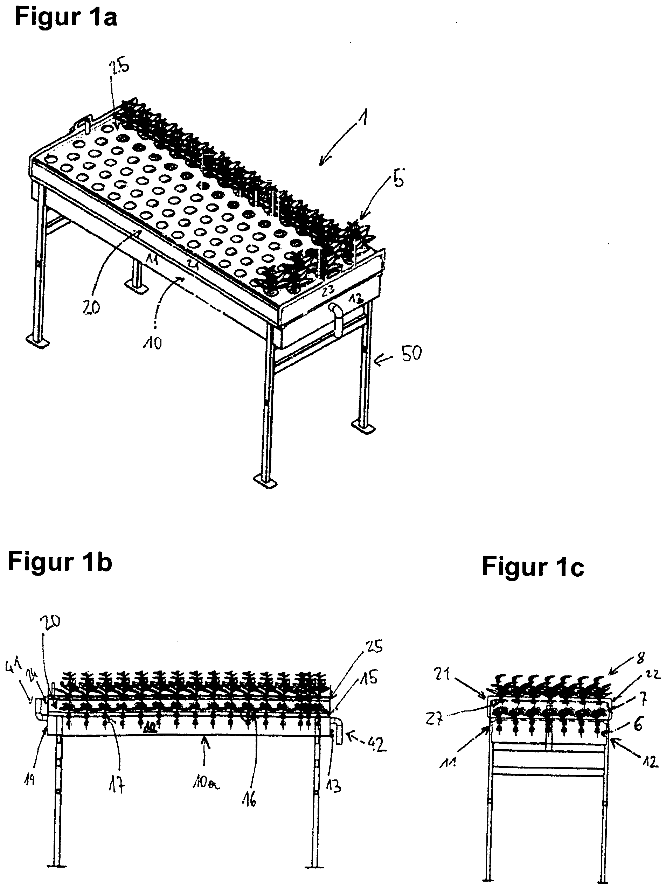

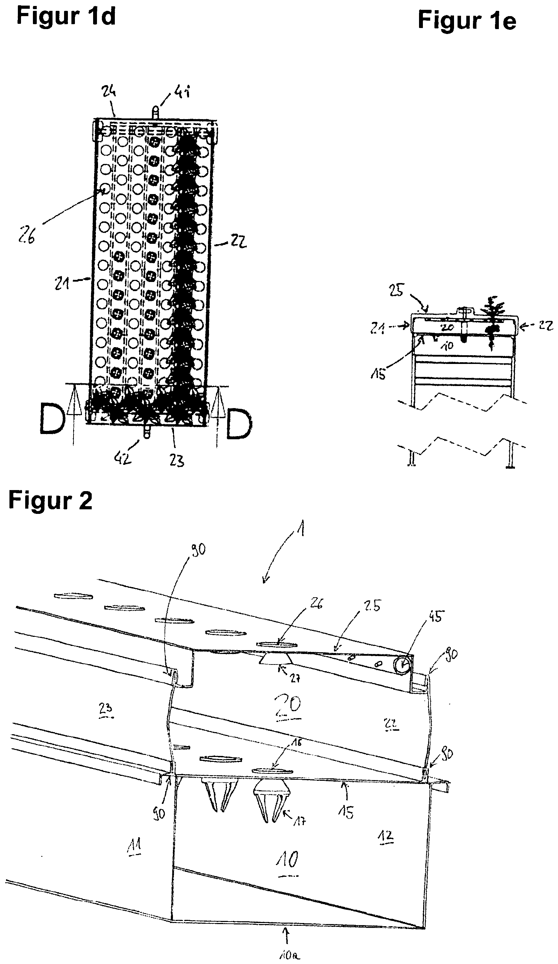

Figur 1 a zeigt eine perspektivische Ansicht einer ersten Ausführungsform einer erfindungsgemäßen Vorrichtung 1. Figur 1b zeigt dieselbe Ausführungsform von der Seite aus gesehen. Figur 1c zeigt dieselbe Ausführungsform von vorne. Figur 1 d zeigt dieselbe Ausführungsform von oben. Figur 1e zeigt einen Querschnitt durch dieselbe Ausführungsform an der in Figur 1d mit dem Buchstaben D gekennzeichneten Schnittebene.

Die Vorrichtung gemäß Figur 1 weist eine erste Kammer 10 und eine zweite Kammer 20 auf.

Zwischen der ersten Kammer 10 und der zweiten Kammer 20 befindet sich eine erste Trennwand 15. Oberhalb der zweiten Kammer 20 befindet sich eine zweite Trennwand 25.

Die erste Kammer wird durch die erste Trennwand als Deckfläche, durch die linke seitliche Begrenzungsfläche 11, die rechte seitliche Begrenzungsfläche 12, die vordere Begrenzungsfläche 13, die hintere Begrenzungsfläche 14 sowie durch die Bodenfläche 10a definiert. Die erste Kammer ist vollumfänglich durch stabile Wandungen begrenzt. Diese können beispielsweise aus Metall oder einem steifen Plastik gefertigt sein.

Die zweite Kammer wird durch die zweite Trennwand als Deckfläche, durch die erste Trennwand als Boden, durch die linke seitliche Begrenzungsfläche 21, die rechte seitliche Begrenzungsfläche 22, die vordere Begrenzungsfläche 23 und die hintere Begrenzungsfläche 24 definiert.

Innerhalb der ersten Trennwand befinden sich Verbindungsöffnungen 16, die die Innenräume der ersten Kammer 10 und der zweiten Kammer 20 miteinander verbinden. Innerhalb der zweiten Trennwand 25 befinden Ausgangsöffnungen 26, die die zweite Kammer mit der Umgebung oberhalb der Vorrichtung verbindet.

Sowohl die erste Kammer als auch die zweite Kammer sind flach ausgeführt. Die erste Trennwand 15 und die zweite Trennwand 25 sind parallel zueinander angeordnet.

Die Vorrichtung weist eine Vielzahl von Verbindungsöffnungen 16 und Ausgangsöffnungen 26 auf, wobei die Gesamtzahl an Verbindungsöffnungen und Ausgangsöffnungen einander entspricht. Einer Verbindungsöffnung 16 ist jeweils eine Ausgangsöffnung 26 zugeordnet, welche miteinander fluchtet.

An den Verbindungsöffnungen 16 sind Mittel 17 zur Fixierung eines Samens bzw. Setzlings angebracht. An den Ausgangsöffnungen 26 sind Mittel 27 zur Führung der Sprossachse angebracht.

Die Vorrichtung weist eine Zulaufleitung 41 und eine Ablaufleitung 42 auf. Durch die Zulaufleitung kann Wasser oder eine Nährstofflösung in die erste Kammer 10 eingebracht werden. Verbrauchtes Wasser bzw. verbrauchte Nährstofflösung verlassen die erste Kammer 10 durch die Ablaufleitung 42. Die erste Kammer 10 ist vorzugsweise mit einem anorganischen Substrat gefüllt, wie beispielsweise mit körnigem, granuliertem Blähton. Die Vorrichtung in der in Figur 1 gezeigten Ausführungsform ist insbesondere für den Anbau der Pflanzen als Hydrokultur geeignet.

In der Figur sind eine Vielzahl von Pflanzen 5 gezeigt. Die Wurzeln 6 dieser Pflanzen befinden sich innerhalb der ersten Kammer 10, ein Abschnitt der Sprossachse samt Erntegut 7 befindet sich in der zweiten Kammer 20, und das Blätterdach befindet sich oberhalb der Vorrichtung. Die Sprossachse, welche sich von den Wurzeln 6 über die Ertragsfrüchte 7 zum Blätterdach 8 erstreckt durchläuft eine Verbindungsöffnung 16 sowie eine Ausgangsöffnung 26, wobei die jeweiligen Öffnungen miteinander fluchten.

Im Zuge einer Aufzucht wird ein keimfähiges Pflanzenteil an einem Fixierungsmittel 17 im Bereich einer Verbindungsöffnung 16 angebracht. In dieser Phase befindet sich die zweite Trennwand 25 sehr nahe an der ersten Trennwand 15, so dass die trichterförmigen Mittel zur Führung der Sprossachse 27 praktisch an den Verbindungsöffnungen 16 anliegen. Der sprießende Spross durchdringt eine Verbindungsöffnung 16 und zugleich auch eine Ausgangsöffnung 26. Die sich bildenden Wurzeln 6 werden in der ersten Kammer 10 mit den notwendigen Nährstoffen versorgt.

Wenn der Setzling 5 eine bestimmte Größe erreicht hat, und die Blätterkrone 8 einen ausreichenden Überstand über der zweiten Trennwand 25 besitzt, wird diese zweite Trennwand angehoben und somit das Volumen der zweiten Kammer und der Abstand zwischen der ersten Trennwand 15 und der zweiten Trennwand 25 vergrößert. Dies kann auch durch die Kraft der Pflanze geschehen.

In der zweiten Kammer 20 entstehe ein Abschnitt entlang der Sprossachse, welcher sowohl von den Wurzeln als auch von der Blätterkrone abgetrennt ist. Daran bildet sich im weiteren Verlauf das Erntegut. Das Klima und die Luftfeuchtigkeit innerhalb der zweiten Kammer wird durch die Sprenkelanlage 45 beeinflußt, um ein optimales Wachstum des Erntegutes zu gewährleisten.

Die Vorrichtung weist ferner ein Gestell 50 auf, welches vier Standfüße 51 aufweist. Die Vorrichtung ist als tischförmige, modulare Aufzuchteinheit ausgebildet, wobei die Kammern und Trennplatten die Tischplatte ausbilden.

Figur 2 zeigt einen perspektivischen Schnitt durch eine weitere Ausführungsform einer erfindungsgemäßen Vorrichtung.

Die Ausführungsform ist der im Zusammenhang mit Figur 1 beschriebenen Ausführungsform ähnlich, wobei in diesem Zusammenhang auf die dortige Beschreibung verwiesen wird.

Besonders deutlich läßt sich in Figur 2 die Gestalt der Haltemittel 17 und der Führungsmittel 27 erkennen, welche an den Verbindungsöffnungen 16 bzw. and den Ausgangsöffnungen 26 befestigt sind. Das Haltemittel 17 hat eine krallenartige Gestalt und ragt in die erste Kammer 10 hinein. Durch die krallenartige Ausführung eignet es sich beispielsweise zum Halten einer sprießenden Kartoffel. Das Führungsmittel hat eine trichterförmige Gestalt und ragt in die zweite Kammer 20 hinein. In Richtung der Ausgangsöffnung 26 verjüngt sich der Trichter.

Ferner ist in Figur 2 deutlich und gut zu erkennen, dass die linke seitliche Begrenzungsfläche 21 und die rechte seitliche Begrenzungsfläche 22 der zweiten Kammer 20 flexibel ausgebildet sind, so dass diese bei einer Volumenvergrößerung der Kammer 20 durch Vergrößern des Abstandes zwischen der ersten Trennplatte 15 und der zweiten Trennplatte 25 gedehnt werden können und weiterhin die gesamte Kluft zwischen erster Trennplatte 15 und zweiter Trennplatte 25 abdecken.

Die seitlichen Begrenzungsflächen 22 und 23 sind ferner über schienenartige Halterungen 90 an den Seitenkanten der ersten Trennwand 15 und der zweiten Trennwand 25 mit den Trennwänden verrastet, so dass diese in Längsrichtung der Vorrichtung 1 verschoben werden können. So kann die seitliche Begrenzung der zweiten Kammer bei Bedarf zumindest teilweise entfernt werden.

Im Zuge einer Aufzucht wird ein keimfähiges Pflanzenteil an einem Fixierungsmittel 17 im Bereich einer Verbindungsöffnung 16 angebracht. In dieser Phase befindet sich die zweite Trennwand 25 sehr nahe an der ersten Trennwand 15, so dass die trichterförmigen Mittel zur Führung der Sprossachse 27 praktisch an den Verbindungsöffnungen 16 anliegen. Der sprießende Spross durchdringt eine Verbindungsöffnung 16 und zugleich auch eine Ausgangsöffnung 26. Dies wird durch die trichterartige Gestalt des Führungsmittels 27 begünstigt. Die sich bildenden Wurzeln 6 werden in der ersten Kammer 10 mit den notwendigen Nährstoffen versorgt.

Wenn der Setzling 5 eine bestimmte Größe erreicht hat, und die Blätterkrone 8 einen ausreichenden Überstand über der zweiten Trennwand 25 besitzt, wird diese zweite Trennwand angehoben und somit das Volumen der zweiten Kammer und der Abstand zwischen der ersten Trennwand 15 und der zweiten Trennwand 25 vergrößert. Dies kann auch durch die Kraft der Pflanze geschehen.

In der zweiten Kammer 20 entstehe ein Abschnitt entlang der Sprossachse, welcher sowohl von den Wurzeln als auch von der Blätterkrone abgetrennt ist. Daran bildet sich im weiteren Verlauf das Erntegut. Das Klima und die Luftfeuchtigkeit innerhalb der zweiten Kammer wird durch die Sprenkelanlage 45 beeinflußt, um ein optimales Wachstum des Erntegutes zu gewährleisten.

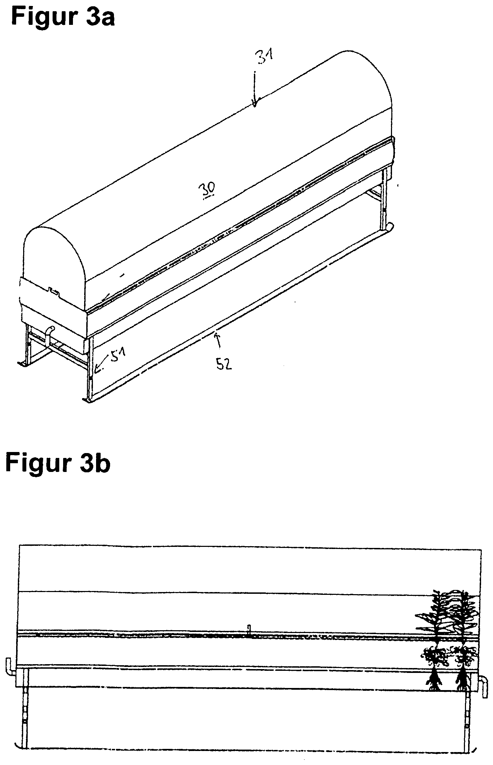

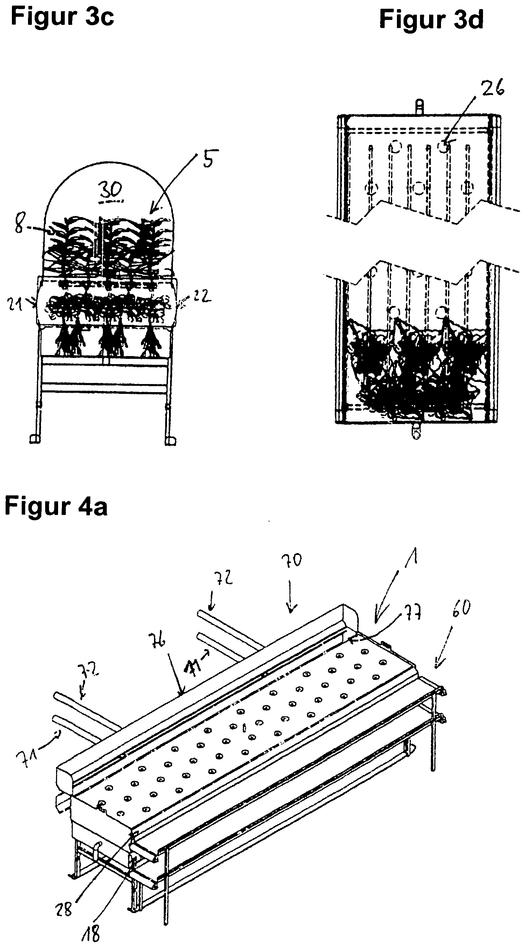

Figur 3a zeigt eine perspektivische Ansicht einer weiteren Ausführungsform einer erfindungsgemäßen Vorrichtung 1. Figur 3b zeigt dieselbe Ausführungsform von der Seite aus gesehen. Figur 3c zeigt dieselbe Ausführungsform von vorne. Figur 3d zeigt dieselbe Ausführungsform von oben.

Die Ausführungsform ist der im Zusammenhang mit Figur 1 beschriebenen Ausführungsform ähnlich, wobei in diesem Zusammenhang auf die dortige Beschreibung verwiesen wird.

In Figur 3c wird besonders deutlich, dass die linke seitliche Begrenzungsfläche 21 und die rechte seitliche Begrenzungsfläche 22 der zweiten Kammer 20 flexibel ausgebildet sind. Durch eine zwischen der ersten Trennplatte 15 und der zweiten Trennplatte 25 und die mit einhergehende Volumenvergrößerung der zweiten Kammer 20 wurden diese bereist gedehnt. Die in Figur 3 gezeigten Pflanzen 5 sind bereits erwachsener als die in der Figur 1 gezeigten Pflanzen.

Im Gegensatz zur Ausführungsform in Figur 1 weist die in Figur 3 gezeigte Ausführungsform eine dritte Kammer 30 auf, welche durch eine transparente Haube 31 abgedeckt wird. Die Ausgangsöffnungen 26 verbinden somit die zweite Kammer 20 mit der dritten Kammer 30. Die Blätterkrone 8 der Pflanzen 5 befindet sich innerhalb der dritten Kammer 30.

Die erfindungsgemäße Vorrichtung gemäß Ausführungsform in Figur 3 stellt ein Miniaturgewächshaus dar, wobei sich alle Teile der Pflanze 5 in einer von der Umgebung abgetrennten und gegebenenfalls klimatisierten Zone befinden. Durch die transparente Haube 31 wird die Krone 8 der Pflanzen mit Sonnenlicht von außen bestrahlt.

Das Gestell 50 der Vorrichtung gemäß Ausführungsform in Figur 3 umfasst neben den Füßen 51 ferner Kufen 52, mit welchen sich die Vorrichtung bei Bedarf problemlos an einem entsprechenden Leitsystem verschieben lässt.

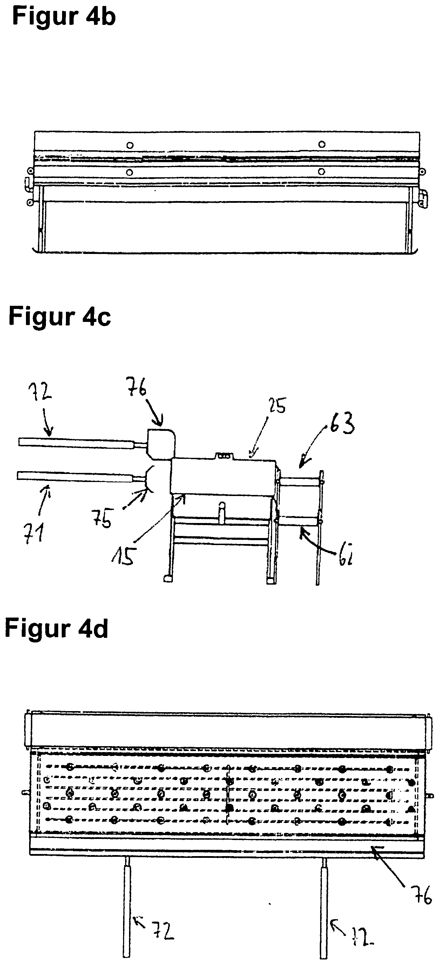

Figur 4 zeigt erneut die in Figur 3 abgebildete Ausführungsform mit abgenommener Deckelkappe 31.

Figur 4a zeigt eine perspektivische Ansicht einer weiteren Ausführungsform einer erfindungsgemäßen Vorrichtung 1. Figur 4b zeigt dieselbe Ausführungsform von der Seite aus gesehen. Figur 4c zeigt dieselbe Ausführungsform von vorne. Figur 4d zeigt dieselbe Ausführungsform von oben.

Durch das Entfernen der Deckkappe 31 besteht die dritte Kammer 30 nun nicht mehr und das Blätterdach der Pflanze befindet sich im Freien, vergleichbar mit der in Figur 1 gezeigten Ausführungsform.

Ferner ist in Figur 4 eine Ernteanlage dargestellt, die sich aus einer Transporteinrichtung 60 und einer Schiebeeinrichtung 70 zusammensetzt.

Die Fördereinrichtung 60 weist zwei Förderbänder 62 und 63 auf. Das Förderband 62 läuft seitlich an der erfindungsgemäßen Vorrichtung auf einer Höhe knapp unterhalb dem Niveau der ersten Trennwand 15 entlang. Es liegt direkt an der Vorrichtung an oder verläuft nur in geringem Abstand dazu. Das Förderband 63 verläuft deckungsgleich zum Förderband 62 und oberhalb des Förderbandes 62. Es läuft ebenfalls seitlich an der erfindungsgemäßen Vorrichtung und liegt direkt an der Vorrichtung an oder verläuft nur in geringem Abstand dazu. Das Förderband 63 verläuft knapp unterhalb dem Level der zweiten Trennwand 25.

Selbstverständlich ist es denkbar, dass auch nur das erste Förderband oder das zweite Förderband vorhanden sind.

In der Abbildung sind ferner die Rampen 18 und 28 gezeigt. Die Rampe 18 grenzt direkt an die Längskante der ersten Trennwand 15 an und verläuft von dieser Kante schräg nach unten geneigt von der Vorrichtung 1 weg. Diese Rampe kann ein separates Bauteil sein, zur Fördereinrichtung 60 gehören, oder an der erfindungsgemäßen Vorrichtung vorhanden sein.

Sollte es sich bei der Rampe 18 um ein separates Bauteil handeln, oder sollte die Rampe 18 zur Fördereinrichtung 60 gehören, ist es möglich, dass an der erfindungsgemäßen Vorrichtung auf Höhe der ersten Trennwand 15 ein Mittel zur Anbringung einer Rampe vorgesehen ist.

In einer Ausführungsform kann es sich bei der Rampe 18 auch um einen nach außen geklappten Teil der seitlichen Begrenzungsfläche 22 handeln.

Die Schiebeeinrichtung 70 umfasst ein Paar an Schiebern 71, welche auf der Höhe der zweiten Kammer angeordnet sind, und ein weiteres Paar an Schiebern 72, die über dem Level der zweiten Trennwand 25 angeordnet sind.

Der alle Schieber umfassen ein Hydrauliksystem, das die an den Schiebern angebrachten Werkzeuge in den Bereich der erfindungsgemäßen Vorrichtung schieben kann.

Am ersten Paar an Schiebern 71 ist ein Schild 75 angebracht, welches durch die zweite Kammer geführt werden, wobei das Erntegut auf der anderen Seite der zweiten Kammer hinausgedrückt wird. Das abgestreifte Erntegut wird auf der gegenüberliegenden Seite über Rampe 18 auf das Förderband 62 geleitet und entlang der Längsachse der erfindungsgemäßen Vorrichtung abtransportiert.

Am zweiten Paar an Schiebern 72 ist eine Schaufel 76 angebracht. Durch Ausfahren der Schieber 72 kann die Schaufel 73 waagrecht knapp oberhalb der zweiten Trennwand 25 vorbeigeführt werden, wobei der obere Teil der Sprossachse sowie die Blätterkrone der Pflanzen von der Vorrichtung gestreift werden. Die abgestreiften Blätterkronen der Nutzpflanzen werden auf der gegenüberliegenden Seite über Rampe 28 auf das Förderband 63 geleitet und entlang der Längsachse der erfindungsgemäßen Vorrichtung abtransportiert. Gegebenenfalls ist an der vorderen Unterkante 77 der Schaufel 76 eine scharfe Kante, ein Messer oder ein sägeartiges Gebilde vorhanden, welches das Schneiden der Sprossachse begünstigt.

Dieser Vorgang lässt sich hervorragend automatisieren. Die erfindungsgemäße Vorrichtung eignet sich somit insbesondere zum großflächigen, industriellen Anbau. Während der im Zusammenhang mit Figur 4 beschriebenen Ernte müssen neben der Deckkappe 31 auch die linke und rechte seitliche Begrenzungswand 21 und 22 von der zweiten Kammer 20 geöffnet werden.

Ein besonders vorteilhafter Schiebemechanismus wurde bereits im Zusammenhang mit Figur 2 erläutert. Besonders bevorzugt ist, wenn die linken und rechten Seitenwände 21 und 22 in Längsrichtung der Vorrichtung abgeschoben werden. Das Abschieben ist besonders vorteilhaft, da sich dieser Vorgang am besten automatisieren lässt.

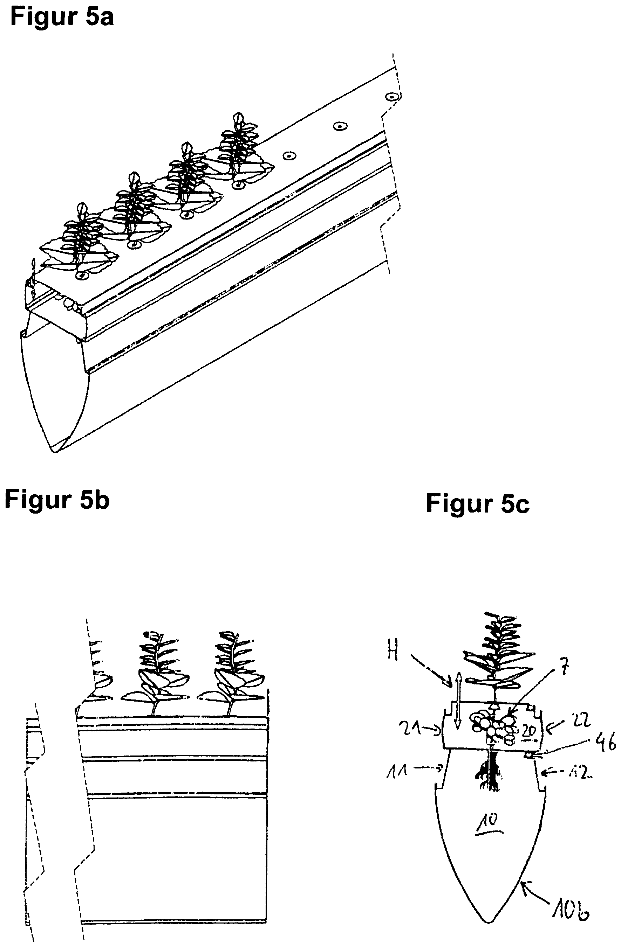

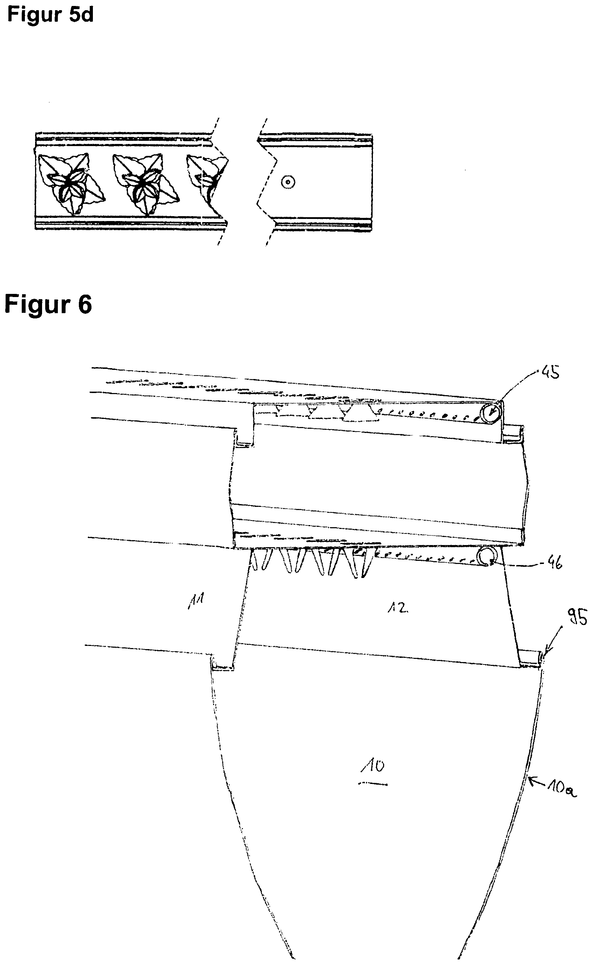

Figur 5 zeigt eine weitere Ausführungsform einer erfindungsgemäßen Vorrichtung.

Figur 5a zeigt eine perspektivische Ansicht dieser Ausführungsform. Figur 5b zeigt dieselbe Ausführungsform von der Seite aus gesehen. Figur 5c zeigt dieselbe Ausführungsform von vorne. Figur 5d zeigt dieselbe Ausführungsform von oben.

In dieser Ausführungsform ist die zweite Kammer 20 in etwa kanalförmig, und die Breitenausdehnung ist im Verhältnis zur Längenausdehnung gering. Die erste Trennwand 15 sowie die zweite Trennwand 25 weisen jeweils mehrere Durchgangsöffnungen 16 bzw. Ausgangsöffnungen 26 auf, die in einer Linie entlang der Längsachse der Vorrichtung angeordnet sind.

Mit einem vertikal nach oben und unten gerichteten Pfeil H ist in Figuren 5a und 5c die Variabilität der Höhe der zweiten Begrenzungsfläche angedeutet, wobei das Volumen der zweiten Kammer 20 vergrößert werden kann, um so mehr Platz für das Erntegut 7 zu schaffen.

In der in Figur 5 dargestellten Ausführungsform ist die untere Begrenzung der ersten Kammer 10 ein flexibler, wasserundurchlässiger Plastiksack 10b. Dieser ist an Befestigungsmitteln an den linken und rechten Seitenwänden 11 und 12 der ersten Kammer 10 angebracht. Im Erntefall kann dieser Sack durch Lösung einer Verbindung abgenommen werden, oder ähnlich der zeitlichen Begrenzungswände 21 der zweiten Kammer in Längsrichtung abgestreift werden. Zu diesem Zweck kann der Sack 10a über schienenartige Halterungen an den unteren Seitenkanten der linken und rechten Seitenwände 11 und 12 der ersten Kammer 10 verrastet sein, so dass dieser in Längsrichtung der Vorrichtung verschoben werden kann.

Werden bei einer Ernte das Blätterdach sowie der fruchttragende Teil der Pflanze entfernt, so verbleiben zunächst die Wurzeln der Pflanze in der ersten Kammer und müssen ebenfalls entfernt werden. In der in Figur 4 gezeigten Ausführungsform können die Wurzeln 6 in den Sack 13 fallen und so in einfacher Art und Weise gesammelt und abtransportiert werden.

Im Falle einer Verwendung eines wasserdichten Sackes 10a ist eine aeroponische Pflanzenzucht besonders vorteilhaft, da diese durch das vergleichsweise große Volumen der ersten Kammer nicht beeinträchtigt wird. Zu diesem Zweck sind in der ersten Kammer Vernebeler 46 vorhanden, die unter Versorgung mit einer Nährstofflösung in der ersten Kammer einen nährstoffreichen Nebel erzeugen.

Figur 6 zeigt eine perspektivische Teilansicht eines Querschnittes durch eine Ausführungsform einer erfindungsgemäßen Vorrichtung gemäß Figur 5. Auf die Beschreibung von Figur 5 wird in diesem Zusammenhang verwiesen.

In dieser Figur sind insbesondere die schienenartigen Halterungen 95 an den unteren Seitenkanten der linken und rechten Seitenwände 11 und 12 der ersten Kammer 10 deutlich dargestellt, an denen der Sack 10a verrastet sein kann, so dass dieser in Längsrichtung der Vorrichtung verschoben werden kann.

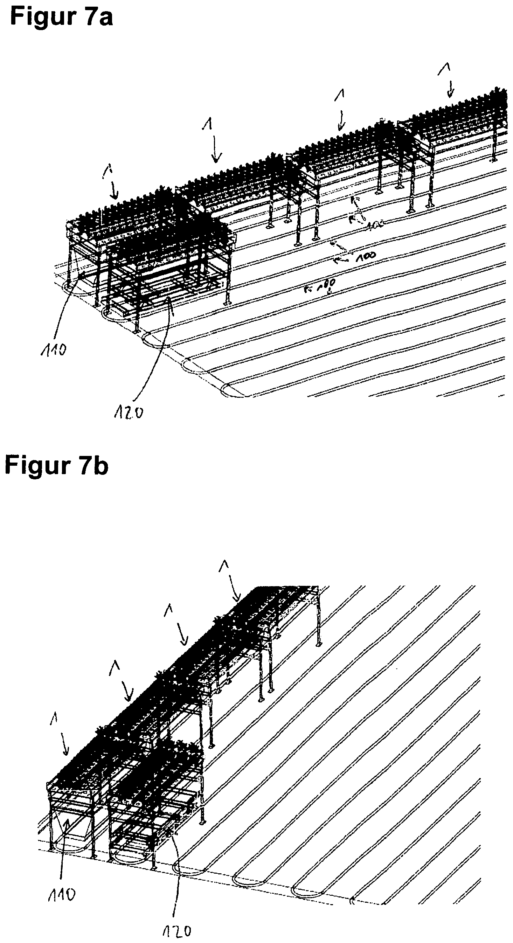

Figuren 7a und 7b zeigen zwei perspektivische Ansichten einer Pflanzenzuchtanlage mit mehreren erfindungsgemäßen Vorrichtungen 1, die entlang einem Raster ausgerichtet sind. Die Vorrichtungen 1 sind dabei jeweils oberhalb von einem Paar an Schienen 100 angeordnet, welches den automatisierten Zugang einer Reihe von Gegenständen und Maschinen ermöglicht. So kann beispielsweise eine Wanne 110 automatisch unter die erfindungsgemäße Vorrichtung gefahren werden, so dass bei einem Öffnen der unteren Begrenzungswand 10a bzw. 10b der ersten Kammer 10 ein entweichendes Substrat, eine entweichende Nährlösung sowie gegebenenfalls die Wurzeln bei einer Ernte aufgefangen und abtransportiert werden können. Dieser Vorgang lässt sich ebenfalls leicht automatisieren.

Ferner kann ein Hebekarren 120 unterhalb der Einheit eingefahren werden, der an einer geeigneten Stelle des Gestells mit der erfindungsgemäßen Vorrichtung verrastet werden kann. So ist die automatische Verlegung einer erfindungsgemäßen Vorrichtung entlang der Schienen 100 möglich.

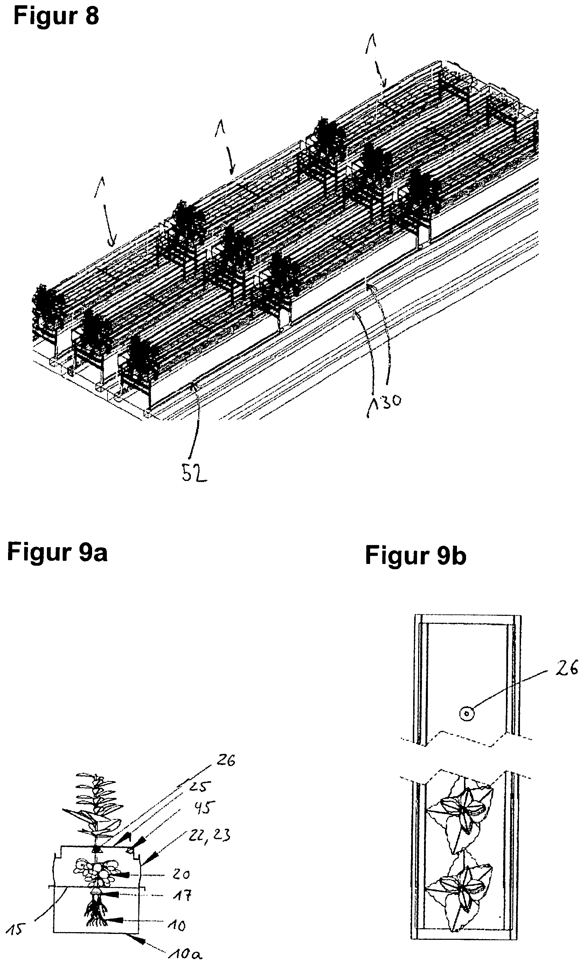

Figur 8 zeigt eine perspektivische Anordnung von mehreren erfindungsgemäßen Vorrichtungen 1 gemäß der in Figur 2 dargestellten Ausführungsform, wobei diese als Miniaturgewächshäuser auf freiem Feld stehen. Über die Kufen 52 werden diese Vorrichtungen 1 entlang von Schienen 130 über ein Feld verteilt, um eine gute Platzausnutzung zu gewährleisten und das Aufstellen bzw. den Abtransport wesentlich zu vereinfachen bzw. automatisieren zu können. Ferner kann vorgesehen sein, dass in den Vertiefungen 130 ein Fördermechanismus vorgesehen ist, mit Hilfe dessen die erfindungsgemäßen Vorrichtungen 1 automatisch entlang der Vertiefungen 130 verschoben werden können.

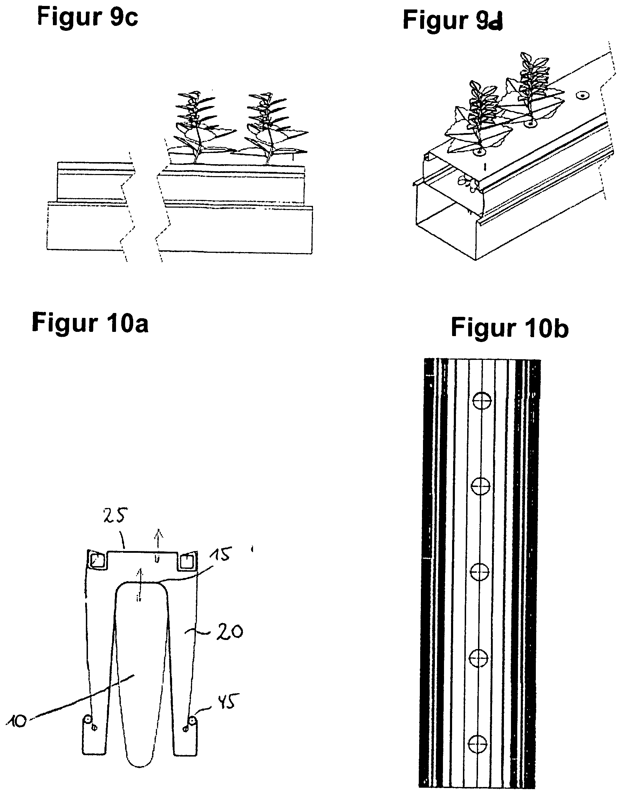

Figur 9 zeigt in unterschiedlichen Ansichten eine weitere Ausgestaltung der Vorrichtung gemäß der vorliegenden Erfindung.

Aus der Querschnittsansicht gemäß Figur 9a ist der grundsätzliche Aufbau der Vorrichtung ersichtlich. Oberhalb der ersten Kammer 10 zur Aufnahme der Wurzeln befindet sich die zweite Kammer 20 zur Aufnahme des Erntegutes, beispielsweise von Kartoffeln, Tomaten oder dergleichen.

Mit dem Bezugszeichen 25 ist die zweite Trennwand gekennzeichnet, die die zweite Kammer nach oben hin abgrenzt. In dieser zweiten Trennwand befinden sich Ausgangsöffnungen, durch die der Stiel der Pflanzen hindurch ragt, so dass sich die Blätter oberhalb der zweiten Kammer 20 und damit auch oberhalb der zweiten Trennwand 25 befinden.

Mit dem Bezugszeichen 22, 23 sind die seitlichen Begrenzungswände der zweiten Trennwand gekennzeichnet.

Diese seitlichen Wandungen können in ihrer Höhe verstellbar ausgeführt sein bzw. aus einem flexiblen Material ausgeführt sein.

Mit dem Bezugszeichen 45 ist eine Sprenkelanlage gekennzeichnet, durch die beispielsweise Luftfeuchtigkeit oder Nährstoffe in die zweite Kammer 20 eingeführt werden können, um ein optimales Wachstum des Erntegutes zu gewährleisten.

Wie aus Figur 9a ersichtlich, befindet sich diese Sprenkelanlage in Längsrichtung der Vorrichtung und in einem oberen Eckenbereich der zweiten Kammer 20.

Mit dem Bezugszeichen 15 ist die erste Trennwand gekennzeichnet, die die erste Kammer 10 von der zweiten Kammer trennt. Auch in dieser ersten Trennwand 15 befinden sich Öffnungen zur Aufnahme von Haltemitteln, mittels derer die Setzlinge bzw. Samen fixiert werden.

Unterhalb dieser Haltemittel befinden sich in der ersten Kammer 10 die Wurzeln der Pflanze.

Mit dem Bezugszeichen 10a ist die Bodenwand der ersten Kammer 10 gekennzeichnet.

Wie bereits oben ausgeführt, ist es denkbar, dass sich in dem Kanal 10 eine Nährstofflösung, vorzugsweise eine wässrige Nährstofflösung befindet bzw. dass der Kanal 10a von einer solchen Lösung durchströmt wird, um den Wurzeln hinreichend Nährstoffe und/oder auch Luft zuzuführen, sofern dies erforderlich ist.

Figur 9b zeigt die Anordnung gemäß Figur 9a in einer Draufsicht, wobei hier wieder mit dem Bezugszeichen 26 die in der oberen Trennwand 25 angeordneten Öffnungen ersichtlich sind, durch die sich die Sprossachse 27 aus der zweiten Kammer 20 nach außen hin erstreckt.

Figur 9c zeigt die Anordnung gemäß Figur 9a in einer Seitenansicht und Figur 9d zeigt die Anordnung gemäß Figur 9a in einer perspektivischen Ansicht, in der nochmals deutlich wird, dass die beiden Kammern 10, 20 übereinander liegen.

Bei dieser Anordnung handelt es sich auch nur um ein Beispiel, das die Erfindung nicht beschränkt.

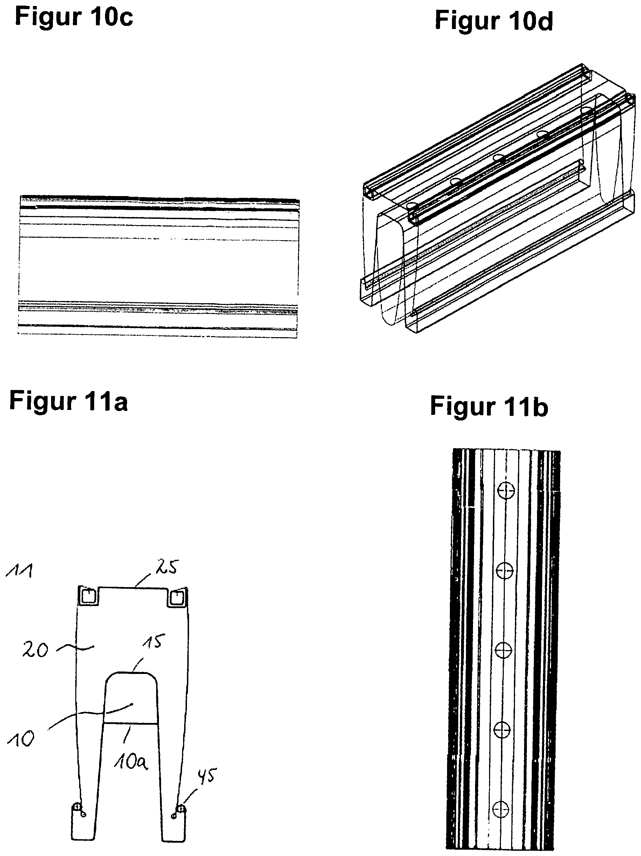

Wie dies aus Figur 10 ersichtlich ist, ist es ebenso denkbar, dass die zweite Kammer 20 sich nicht nur oberhalb der ersten Kammer 10 erstreckt, sondern auch in einem oder beiden seitlichen Bereichen der ersten Kammer 10. Figur 10a zeigt wieder die erste Kammer 10 zur Aufnahme der Wurzeln der Pflanze. Diese Kammer 10 ist in dem Ausführungsbeispiel gemäß Figur 10a im Prinzip sackförmig ausgeführt und kann aus festen oder flexiblen Wandungen bestehen. Im Gegensatz zu der Ausführungsform gemäß Figur 9 erstreckt sich die zweite Kammer 20 nicht nur oberhalb der ersten Kammer 10, sondern auch in beiden Seitenbereichen der Kammer 10, wie dies aus Figur 10a ersichtlich ist. Somit bildet die zweite Kammer 10 eine umgekehrt U-förmige Anordnung und erstreckt sich damit sowohl oberhalb als auch zu beiden Seiten der ersten Kammer 10.

Dies hat den Vorteil, dass das Volumen der zweiten Kammer 20 gegenüber dem Ausführungsbeispiel gemäß Figur 9 vergrößert ist, so dass mehr Raum zur Entfaltung des entsprechenden Bereiches der Pflanze vorgesehen ist, der sich in der zweiten Kammer 20 befindet.

Wie durch Doppelpfeile angedeutet, kann vorgesehen sein, dass sowohl die erste Trennwand 15 als auch die zweite Trennwand 25 in ihrer Höhe variabel ist, so dass das Volumen der ersten Kammer 10 und/oder der zweiten Kammer 20 durch eine entsprechende Höhenverstellung variabel einstellbar ist. Wie auch in dem Ausführungsbeispiel gemäß Figur 9 kann vorgesehen sein, dass sich in der zweiten Trennplatte 25 eine oder mehrere Öffnungen zur Aufnahme der Sprossachse bzw. des Stiels der Pflanze erstrecken.

Mit dem Bezugszeichen 45 sind auch bei dem Ausführungsbeispiel gemäß Figur 10 Kanäle gekennzeichnet, durch die eine Berieselung bzw. Besprenkelung der entsprechenden Kammern bzw. des darin befindlichen Teils der Pflanze möglich ist. Durch diese Kanäle kann beispielsweise Flüssigkeit, Luft, eine Nährstofflösung oder dergleichen in die erste bzw. in die zweite Kammer geführt werden.

Figur 10b zeigt die Anordnung gemäß Figur 10a in einer Draufsicht, Figur 10c zeigt die Anordnung gemäß Figur 10a in einer Seitenansicht und Figur 10d zeigt die Anordnung gemäß Figur 10a in einer perspektivischen Ansicht.

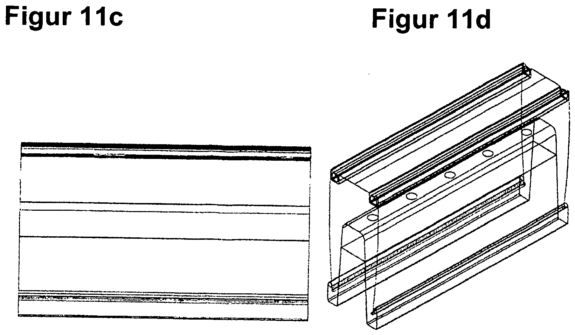

Figur 11 zeigt eine weitere Ausführungsform, die der gemäß Figur 10 ähnelt. Als Unterschied ist zu erwähnen, dass die erste Kammer 10 durch eine untere horizontale Trennwand abgegrenzt ist und damit insgesamt ein kleineres Volumen aufweist, als die erste Kammer 10 gemäß Figur 10.

Auch in dem Ausführungsbeispiel gemäß Figur 11 sind die erste Trennplatte 15 und die zweite Trennplatte 25 höhenverstellbar ausgeführt, so dass eine Volumenänderung der ersten Kammer 10 sowie auch der zweiten Kammer 20 denkbar ist.

Alternativ oder zusätzlich dazu kann auch vorgesehen sein, dass die Bodenplatte 10a der ersten Kammer höhenveränderlich ausgeführt ist, so dass das Volumen der ersten Kammer 10 unabhängig von dem Volumen der zweiten Kammer veränderbar ist.

Hinsichtlich der weiteren Merkmale und Ausführungen des Ausführungsbeispiels wird Bezug genommen auf die Erläuterungen zu Figur 10.

Figur 11b zeigt die Anordnung gemäß Figur 11 a in einer Draufsicht, Figur 11c zeigt die Anordnung gemäß Figur 11a in einer Seitenansicht und Figur 11d zeigt die Anordnung gemäß Figur 11a in einer perspektivischen Ansicht.

Mit einer erfindungsgemäßen Vorrichtung kann die Aufzucht besonders einfach und gut automatisiert ausgeführt werden, und führt zu verbesserten Erträgen gegenüber Vorrichtungen gemäß dem Stand der Technik. Zudem ermöglicht die erfindungsgemäße Vorrichtung eine einfache Ernte, indem die Ertragsfrüchte der Pflanze im wesentlichen getrennt von der Wurzel und dem Blätterdach innerhalb der zweiten Kammer der erfindungsgemäßen Vorrichtung liegen.

## Patentansprüche

1. Vorrichtung zur Aufzucht einer oder mehrerer Pflanzen, wobei die Vorrichtung wenigstens eine erste (10) und eine zweite Kammer (20) aufweist, die durch eine erste Trennwand (15) voneinander abgetrennt sind, wobei die Innenräume der ersten (10) und der zweiten Kammer (20) durch eine oder mehrere Verbindungsöffnungen (16) in der ersten Trennwand (15) verbunden sind, und wobei die zweite Kammer (20) eine oder mehrere Ausgangsöffnungen (26) aufweist, die an einer zweiten Trennwand (25) angeordnet sind, **dadurch gekennzeichnet, dass** das Volumen der ersten Kammer (10) und/oder der zweiten Kammer (20) veränderbar ist.

2. Vorrichtung nach Anspruch 1 , wobei das Volumen der ersten Kammer (10) und/oder der zweiten Kammer (20) durch eine Veränderung der Position der ersten (15) und/oder zweiten Trennwand (25) und/oder durch eine Veränderung des Abstandes zwischen der ersten (15) und der zweiten Trennwand (25) veränderbar ist.

3. Vorrichtung nach einem der vorangehenden Ansprüche, wobei wenigstens eine und vorzugsweise zwei seitliche Begrenzungsflächen (21, 22) der zweiten Kammer (20), die vorzugsweise die erste (15) und die zweite Trennwand (25) miteinander verbinden, flexibel ausgebildet sind und/oder verschwenkbar und/oder abnehmbar sind, vorzugsweise durch Verschieben in Richtung einer Seitenkante der ersten (15) und zweiten Trennwand (25).

4. Vorrichtung nach einem der vorangehenden Ansprüche, wobei gleich viele Verbindungsöffnungen (16) und Ausgangsöffnungen (26) vorhanden sind und/oder wobei jeweils ein Paar an Verbindungsöffnungen (16) und Ausgangsöffnungen (26) fluchtet.

5. Vorrichtung nach einem der vorangehenden Ansprüche, wobei die Vorrichtung eine dritte Kammer (30) aufweist, wobei sich die zweite (20) und die dritte Kammer (30) die zweite Trennwand (25) teilen und wobei die Innenräume der zweiten (20) und der dritten Kammer (30) durch die Ausgangsöffnungen (26) verbunden sind, wobei vorzugsweise vorgesehen ist, dass die Begrenzung (31) der dritten Kammer zumindest teilweise durch ein lichtdurchlässiges Material gebildet wird und/oder wobei vorzugsweise vorgesehen ist, dass in der dritten Kammer wenigstens ein Beleuchtungsmittel angebracht ist.

6. Vorrichtung nach einem der vorangehenden Ansprüche, wobei in der ersten (10) und/oder der zweiten (20) und/oder der dritten Kammer (30) das Raumklima gegebenenfalls individuell einstellbar ist und/oder eine Befeuchtungsanlage, insbesondere eine Besprenkelungsanlage (45) oder eine Vernebelungsanlage vorgesehen ist.

7. Vorrichtung nach einem der vorangehenden Ansprüche, wobei alle Begrenzungsflächen der ersten Kammer (10) im Wesentlichen starr ausgebildet sind oder wobei zumindest ein Teil der Begrenzung der ersten Kammer (10) durch einen vorzugsweise wasserdichten Sack gebildet wird, der vorzugsweise abnehmbar ist.

8. Vorrichtung nach einem der vorangehenden Ansprüche, wobei die erste Kammer (10) wenigstens einen Zulauf (41) und/oder wenigstens einen Ablauf (42) aufweist.

9. Vorrichtung nach einem der vorangegangenen Ansprüche, **dadurch gekennzeichnet, dass** sich in der ersten Kammer (10) ein festes und/oder ein fluides Medium als Nährfluid und/oder als Substrat befindet und/oder dass sich in der zweiten Kammer (20) das Erntegut (7) befindet und/oder **dadurch gekennzeichnet, dass** die Vorrichtung als modulare Einheit ausgebildet ist.

10. Vorrichtung nach einem der vorangehenden Ansprüche, **dadurch gekennzeichnet, dass** die zweite Kammer (20) oberhalb der ersten Kammer (10) angeordnet ist und/oder sich in einem Bereich einseitig oder beidseitig der ersten Kammer (10) erstreckt.

11. Verfahren zur Aufzucht einer oder mehrerer Pflanzen in einer Vorrichtung gemäß einem der Ansprüche 1 bis 10 umfassend die schrittweise oder stufenlose Vergrößerung des Volumens der zweiten Kammer (20).

12. Verfahren nach Anspruch 11, wobei die Vergrößerung des Volumens der zweiten Kammer (20) durch Vergrößerung Abstandes zwischen der ersten (15) und der zweiten Trennwand (25) erfolgt.

13. Verfahren zur Ernte des Erntegutes einer oder mehrerer Pflanzen in einer Vorrichtung gemäß einem der Ansprüche 1 bis 10 umfassend das zumindest abschnittsweise Verschwenken, Verschieben oder Abnehmen zumindest einer Begrenzungsfläche (21, 22) der zweiten Kammer (20) und die Entnahme des Erntegutes (7) aus der zweiten Kammer (20).

14. Verfahren nach Anspruch 13, wobei zwei gegenüberliegende Seitenwände zumindest (21, 22) abschnittsweise verschwenkt und/oder verschoben und/oder abgenommen werden und ein Schild oder eine Schaufel von einer Seite durch die zweite Kammer (20) getrieben und das Erntegut (7) auf der anderen Seite hinausgedrückt wird.

## Claims

1. An apparatus for growing one or more plants, wherein the apparatus includes at least a first (10) and a second chamber (20) which are separated from each other by a first dividing wall (15), wherein the interior spaces of the first (10) and the second chamber (20) are connected by one or more connecting openings (16) in the first dividing wall (15), and wherein the second chamber (20) includes one or more exit openings (26) which are arranged on a second dividing wall (25), **characterized in that** the volume of the first chamber (10) and/or of the second chamber (20) is variable.

2. The apparatus according to claim 1, wherein the volume of the first chamber (10) and/or of the second chamber (20) is variable by varying the position of the first (15) and/or second dividing wall (25) and/or by varying the distance between the first (15) and/or the second dividing wall (25).

3. The apparatus according to any of the preceding claims, wherein at least one and preferably two lateral boundary surfaces (21, 22) of the second chamber (20), which preferably connect the first (15) and the second dividing wall (25) with each other, are formed flexible and/or are pivotable and/or removable, preferably by shifting in the direction of a lateral edge of the first (15) and second dividing wall (25).

4. The apparatus according to any of the preceding claims, wherein an equal number of connecting openings (16) and exit openings (26) are present and/or wherein one pair of connecting openings (16) and exit openings (26) each is in alignment.

5. The apparatus according to any of the preceding claims, wherein the apparatus includes a third chamber (30), wherein the second (20) and the third chamber (30) share the second dividing wall (25) and wherein the inner spaces of the second (20) and the third chamber (30) are connected by the exit openings (26), with provision preferably being made that the boundary (31) of the third chamber is at least partly formed by a transparent material and/or with provision preferably being made that in the third chamber at least one illuminating means is mounted.

6. The apparatus according to any of the preceding claims, wherein in the first (10) and/or the second (20) and/or the third chamber (30) the room climate is adjustable individually if required and/or a humidification system, in particular a sprinkling system (45) or a nebulizing system is provided.

7. The apparatus according to any of the preceding claims, wherein all boundary surfaces of the first chamber (10) are formed substantially rigid or wherein at least a part of the boundary of the first chamber (10) is formed by a preferably water-tight sack, which preferably is removable.

8. The apparatus according to any of the preceding claims, wherein the first chamber (10) includes at least one inlet (41) and/or at least one outlet (42).

9. The apparatus according to any of the preceding claims, **characterized in that** in the first chamber (10) a solid and/or a fluid medium is present as a nutrient fluid and/or as a substrate and/or **in that** the crops (7) are located in the second chamber (20) and/or **characterized in that** the apparatus is formed as a modular unit.

10. The apparatus according to any of the preceding claims, **characterized in that** the second chamber (20) is arranged above the first chamber (10) and/or extends in a region on one side or on both sides of the first chamber (10).

11. A method for growing one or more plants in an apparatus according to any of claims 1 to 10, comprising the stepwise or stepless increase of the volume of the second chamber (20).

12. The method according to claim 11, wherein the increase of the volume of the second chamber (20) is effected by increasing the distance between the first (15) and the second dividing wall (25).

13. The method for harvesting the crops of one or more plants in an apparatus according to any of claims 1 to 10, comprising the at least partial swiveling, shifting or removing of at least one boundary surface (21, 22) of the second chamber (20) and the removal of the crops (7) from the second chamber (20).

14. The method according to claim 13, wherein two opposed side walls are at least (21, 22) partly swiveled and/or shifted and/or removed and a shield or a shovel is driven through the second chamber (20) from one side and the crops (7) are pressed out on the other side.

## Revendications

1. Dispositif pour la culture d'une ou de plusieurs plantes, le dispositif comportant au moins une première (10) et une deuxième chambre (20), qui sont séparées l'une de l'autre par une première paroi de séparation (15), les espaces intérieurs de la première (10) et de la deuxième chambre (20) étant reliés par un ou plusieurs orifices de liaison (16) dans la première paroi de séparation (15), et la deuxième chambre (20) comportant un ou plusieurs orifices de sortie (26), qui sont disposés sur une seconde paroi de séparation (25), **caractérisé en ce que** le volume de la première chambre (10) et/ou de la deuxième chambre (20) peut être modifié.

2. Dispositif selon la revendication 1, dans lequel le volume de la première chambre (10) et/ou de la deuxième chambre (20) peut être modifié par une modification de la position de la première (15) et/ou de la seconde paroi de séparation (25) et/ou par une modification de l'écart entre la première (15) et la seconde paroi de séparation (25).

3. Dispositif selon l'une des revendications précédentes, dans lequel au moins une et de préférence deux surfaces de limitation (21, 22) latérales de la deuxième chambre (20), qui relient de préférence la première (15) et la seconde paroi de séparation (25) l'une à l'autre, sont réalisées flexibles et/ou peuvent être pivotées et/ou retirées, de préférence par déplacement dans la direction d'une arête latérale de la première (15) et la seconde paroi (25).

4. Dispositif selon l'une des revendications précédentes, dans lequel il y a autant d'orifices de liaison (16) que d'orifices de sortie (26) et/ou dans lequel respectivement une paire d'orifices de liaison (16) et d'orifices de sortie (26) est alignée.

5. Dispositif selon l'une des revendications précédentes, dans lequel le dispositif comporte une troisième chambre (30), la deuxième (20) et la troisième chambre (30) partageant la seconde paroi de séparation (25) et dans lequel les espaces intérieurs de la deuxième (20) et de la troisième chambre (30) sont reliés par les orifices de sortie (26), la limitation (31) de la troisième chambre étant de préférence prévue en partie formée par un matériau transparent et/ou un moyen d'éclairage étant de préférence prévu monté dans la troisième chambre.

6. Dispositif selon l'une des revendications précédentes, dans lequel le climat ambiant dans la première (10) et/ou la deuxième (20) et/ou la troisième chambre (30) peut, le cas échéant, être réglable individuellement et/ou un système d'humidification, en particulier un système d'aspersion (45) ou un système de brumisation, est prévu.

7. Dispositif selon l'une des revendications précédentes, dans lequel toutes les surfaces de limitation de la première chambre (10) sont réalisées sensiblement rigides ou dans lequel au moins une partie de la limitation de la première chambre (10) est formée par un sac de préférence étanche à l'eau, qui peut de préférence être retiré.

8. Dispositif selon l'une des revendications précédentes, dans lequel la première chambre (10) comporte au moins une arrivée (41) et/ou au moins une évacuation (42).

9. Dispositif selon l'une des revendications précédentes, **caractérisé en ce qu'**un milieu solide et/ou fluide se trouve dans la première chambre (10) comme fluide nutritif et/ou comme substrat et/ou **en ce que** le produit de la récolte (7) se trouve dans la deuxième chambre (20) et/ou **caractérisé en ce que** le dispositif est réalisé sous la forme d'une unité modulaire.

10. Dispositif selon l'une des revendications précédentes, **caractérisé en ce que** la deuxième chambre (20) est disposée au-dessus de la première chambre (10) et/ou s'étend dans une zone d'un côté ou des deux côtés de la première chambre (10).

11. Procédé pour la culture d'une ou de plusieurs plantes dans un dispositif selon l'une des revendications 1 à 10, comprenant l'augmentation par paliers ou en continu du volume de la deuxième chambre (20).

12. Procédé selon la revendication 11, dans lequel l'augmentation du volume de la deuxième chambre (20) s'effectue par l'augmentation de l'écart entre la première (15) et la seconde paroi de séparation (25).

13. Procédé pour la récolte du produit d'une ou de plusieurs plantes dans un dispositif selon l'une des revendications 1 à 10, comprenant le pivotement, le déplacement ou le retrait au moins par sections d'au moins une surface de limitation (21, 22) de la deuxième chambre (20) et le prélèvement du produit de la récolte (7) de la deuxième chambre (20).

14. Procédé selon la revendication 13, dans lequel deux parois latérales (21, 22) opposées sont pivotées et/ou déplacées et/ou retirées au moins par sections et un panneau ou une pelle est entraîné(e) depuis un côté à travers la deuxième chambre (20) et le produit de la récolte (7) est poussé pour sortir de l'autre côté.
